# EUROPEAN PATENT SPECIFICATION

(11) **EP 2 272 584 B1**
(45) Date of publication and mention of the grant of the patent: **05.09.2012**
(21) Application number: 10168508.9
(22) Date of filing: 06.07.2010
(51) Int. Cl.: B01F 13/10, B01F 15/04

(54) **Line for dispensing and mixing products and related method**
Verfahren und Anordnung zur Ausgabe und Mischung von Produkten
Procédé et dispositif pour le dosage et le mélange de produits

(30) Priority: 10.07.2009 IT TO20090516
(43) Date of publication of application: 12.01.2011
(73) Proprietor: Drocco, Luca, 12051 Alba (CN) (IT); Drocco, Mario, 12051 Alba (CN) (IT)
(72) Inventor: Drocco, Luca, 12051 Alba (CN) (IT); Drocco, Mario, 12051 Alba (CN) (IT)
(74) Representative: Di Gennaro, Sergio

(56) References cited:
- EP-A1- 1 764 149
- WO-A2-2007/110764
- US-A- 5 622 692
- US-A1- 2003 110 101

## Description

The present invention relates to the field of creation of products, where the term «products» refers to the mix of bases, (generally pre-dispensed and already present in the final container, and colouring agent products, which are supplied by the machinery forming the subject of what is claimed).

In particular, the present invention regards a dispensing and mixing line for obtaining finished products, where the line is used within shops, commercial centres and the like, consequently, not for use in the industrial field.

It is known, in fact, that in the industrial field there exist production lines for products of the «open» type, i.e., where all the steps of dispensing and mixing of the products are accessible (with the necessary safety devices) by the operator, who, being skilled, is able to intervene along the stations of the line to modify, correct or restore given operating conditions of the line.

In a shop or in a commercial centre where it is the unskilled customer present who has to dispense or mix products that he or she wishes to buy, there cannot be implemented a line in which the various stations thereof are accessible by the customer himself or herself.

Therefore, machineries of this type, in a shop or a commercial centre, normally need the intervention of a skilled operator, who, following the requests of the customer, acts on the machinery so as to satisfy said requests.

Document No. WO2007110764 describes an automated colorimetric machinery, which has dispensing means and mixing means combined in a single structure.

The machinery described in document No. WO2007110764 is characterized by the disadvantage of having to operate necessarily on a single container.

In the second place, the machinery described in WO2007110764 does not have distinct stations proper for execution of the operation of mixing and dispensing, given that the container is in any case kept on a single revolving support. Consequently, the possible operations of maintenance on the machinery are problematical.

Finally, the machinery described in WO2007110764 does not enable simultaneous operation on containers of different sizes or shapes.

The purpose of the invention is to propose a dispensing and mixing line for products that can be used in shops and commercial centres where the customer him/herself will be able to operate the line, following simple instructions, without running the risk of making errors or causing damages to the line itself, avoiding any need for intervention of an operator of the premises and any risk of getting dirty with the product during the operation of dispensing and mixing that he or she performs autonomously, by performing operations of mixing and dispensing of paints also in containers of different size or shapes.

According to the present invention, a line for dispensing and mixing products is provided, as claimed in claim 1.

According to the present invention it is then provided a method for dispensing and mixing products, as claimed in claim 9.

The invention will now be described with reference to the annexed drawings, which illustrate a nonlimiting example of embodiment thereof, wherein:
- Figure 1 illustrates a top plan view of a first embodiment of a line for dispensing and mixing products according to the present invention; and
- Figure 2 is a three-dimensional view of a second embodiment of a line for dispensing and mixing products according to the present invention.

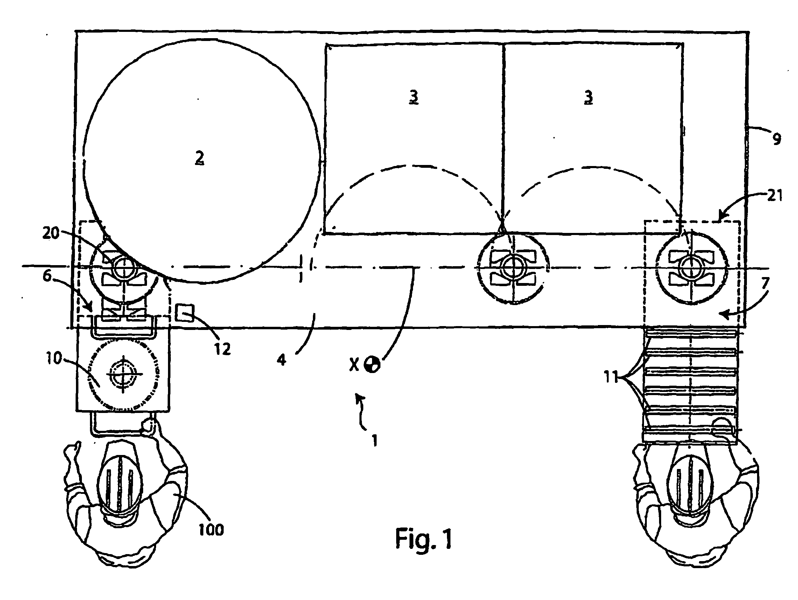

With reference to Figure 1, reference number 1 designates as a whole a line for dispensing and mixing products.

Line 1 comprises a first station 2 for dispensing products and a second station and a third station 3 for mixing products arranged on a common plane and set alongside one another, and enables dispensing and mixing of two or more colouring agents in a container 10.

In detail, station 2 for dispensing products comprises a system for dispensing a number of colouring agents (simultaneously or sequentially), each station 3 for mixing products comprising instead one or more mixers of a gyroscopic or vibrational type.

A gyroscopic mixing station is characterized by a movement that is a combination of two mutually orthogonal circular movements, a vibrational station envisages movement along just one axis (horizontal or vertical). However, also said type of mixing should not be interpreted in a limiting way, given that it is possible to adapt also mixing stations of various types, according to the state of the art, to line 1.

Present in front of station 2 for dispensing products and of the stations 3 for mixing products is a runway 4, equipped, for example, with rollers or a conveyor belt, made to slide or translate on which is container 10 of products, which is displaced from one station to another, describing a rectilinear path along an axis X.

Stations 2 and 3, as likewise runway 4, are contained in a completely closed casing 9, which is inaccessible to the user to prevent him or her from possibly tampering with or involuntarily damaging parts of the line during its operation when using the line without the aid of a skilled operator. Only the operator will be able to remove the container for carrying out any maintenance and repairs that may be necessary on the line.

Present on the left-hand side and right-hand side, respectively, of casing 9 are an entry access 6 and an exit access 7 for one or more containers 10 of products. Line 1 further comprises a station 20 for perforation of containers 10, positioned at station 2 for dispensing products.

In detail, entry access 6 is equipped with a door, which can be opened and closed manually, and a drawer for raising container 10 with a means for moving the container (for example, via a plurality of jaws), to enable perforation in a top part thereof and, moreover, ensure centring thereof in the steps of dispensing and mixing.

Entry access 6 is equipped with a limit switch, which enables detection of the effective and complete closing of the door.

Exit access 7 further comprises a roller carriage 11 to facilitate exit of container 10 once filled.

The door of entry access 6, as likewise that of exit access 7, are equipped with electric locks controlled by the data-processing unit to enable closing thereof during the activities of perforation, and dispensing and mixing of the product.

Finally, line 1 comprises also a station 21 for inserting lids on containers 10, which instead is positioned alongside the dispenser 2.

In detail, lid-inserting station 21 comprises at least one mobile cylinder and a means for positioning the lid on the hole; following upon the aforesaid positioning, the mobile cylinder presses on the lid up to complete insertion thereof into the hole and interrupts the pressure exerted following upon switching of a limit switch.

Perforating station 20 is able to make holes of different sizes and, in the same way, also lid-inserting station 21 must enable insertion of lids of corresponding size in the hole made. The lids of containers 10 are introduced manually onto line 1 and, once the machinery has been regulated for the type of hole and the type of lid to be applied therein, no dimensional variation can be made until a new setting is made.

Finally, line 1 comprises a bar-code reader 12, which enables reading of a code appearing on each of containers 10; said code bears in numerical format the base and/or the colour to be reproduced, and, on the basis of this code, station 2 for dispensing products will carry out dispensing by varying both the colouring agents and the corresponding amount to be introduced into container 10.

Said bar-code reader 12 is interfaced to a computer, installed on line 1, equipped with a monitor (possibly of a touch-screen type), a printer, and possibly a credit-card reader.

Operation of line 1 is described in what follows. A first operating step consists in the selection of the product to be prepared. Said selection can be made through a keypad or via reading of a bar-code (printed on the catalogued sample). Optionally, the bar code of the product can be printed on a product-preparation receipt or ticket issued upon payment for the activity of preparation of the product via the credit-card reader with which the machinery is equipped in such a way that there will be advanced payment for the activity. Once the selection has been performed, the computer requests loading a container 10 on the lifting drawer of entry access 6. If the station is equipped with a bar-code scanner, user 100 must read the bar-code appearing on container 10 using scanner 12. In this way, the data-processing unit will be able to check that the container of a pre-dispensed base 10 is the right one for the product chosen.

A second operating step consists in manual closing of the door of entry access 6; if the limit switch detects effective closing of the door, the data-processing unit activates closing of the electric locks of the door of entry access 6, and container 10 is moved automatically up to a first position, where container 10 is perforated in its top part via perforating station 20.

Then, a third operating step consists in moving perforated container 10 into a second position at product dispensing station 2.

In a fourth operating step, the colouring agents are supplied according to the amounts envisaged in the formula processed by the computer on the basis of manual selection of the product or on the basis of the reading of the bar-code performed previously.

A fifth operating step, which occurs after the operation of dispensing of the colouring agents in container 10, consists in transfer thereof to lid-inserting station 21, where a lid is applied on container 10, in the hole made by perforating station 20.

A sixth operating step consists in transfer to one of mixing stations 3 by means of translation along the axis X on guide system 4, and a second movement along a semicircular path for introduction into first mixing station 3 available.

A seventh operating step involves activation of mixing station 3, for a time sufficient to enable mixing of the product in container 10.

During stay of container 10 in mixing station 3 it is possible to activate a new production for another container following steps 1 to 7 (in the case where the station has two mixers 3) or else 1 to 6 (in the case where there is a single mixer).

The second sequence of operations will lead, in the case where two mixers 3 are present, to loading of the second mixer, if this is available.

When the mixing step is completed on one of mixers 3, the ninth operating step starts, which envisages transfer of container 10 from mixing station 3 to the exit of tunnel 7 though a combination of paths that are mutually orthogonal along axis X or Y or semicircular.

The tenth operating step envisages transfer of container 10 to outside the tunnel at exit 7.

At this point, the eleventh operating step envisages evacuation of container 10 on roller carriage 11, or similar equivalent, in such a way that user 100, who in the meantime has moved from entry access 6 to exit access 7 of line 1, can pick up container 10 filled with the product.

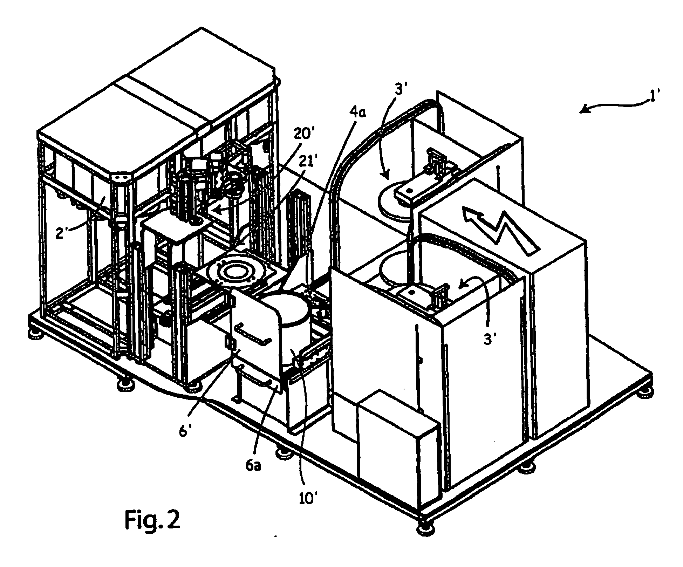

A second embodiment of line 1 is, instead, illustrated in Figure 2.

Said embodiment differs from the one previously described mainly as regards the different location of the various stations.

In detail, the second embodiment of line 1' comprises:
- a product dispensing station 2';
- at least one station 3' for mixing products (in the figure two are represented); and
- an entry/exit access 6', equipped with a door, which can be opened and closed manually by an operator 100, located around which are substantially, in a clockwise direction and starting from the left-hand side of the access itself, lid-inserting station 21', dispensing/perforating station 2', and a first mixing station 3' and a second mixing station 3' for mixing products.

In detail, the door of entry/exit access 6' enables access to a drawer surface 6a, on which a container 10' is positioned.

Entry and exit door 6' is equipped with a limit switch, which is connected to a data-processing unit and is able to detect the effective complete closing of the door itself, as for the first embodiment of line 1. The switch enables start-up of the procedure for dispensing colouring agents by product dispending station 2' only after the complete closing of the door itself.

The door is equipped with an electric lock controlled by the data-processing unit to enable closing thereof during the activities of perforation, dispensing, insertion of the lid, and mixing of the colouring agents.

Appropriate means for displacement of container 10' enable translation thereof from drawer surface 6a to product dispensing station 2'. In detail, said displacement means comprise a rotatable gripper or jaw 4a that can be raised with respect to the height of drawer surface 6a; said jaw 4a enables blocking of container 10' between two or more elements by translating it and raising it towards product dispensing station 2'.

As in the case of the previous embodiment, the line 1' further comprises a perforating station 20', positioned at dispensing station 2'; said perforating station is moreover set alongside a lid-inserting station 21'.

Lid-inserting station 21' is of the type described previously.

Finally, also in its second embodiment line 1' comprises a bar-code reader 12', which enables reading of a code appearing on each of containers 10' according to the operating procedure described previously for embodiment 1.

A first operating step consists in selection of the product to be prepared. Said selection can be made via keypad or by reading a bar-code (printed on the catalogued sample). Optionally, the bar code of the product can be printed on a product-preparation receipt or ticket issued following upon payment of the activity of preparation of the product via the credit-card reader provided along with the machinery, in such a way that there is advanced payment of the activity. Once the selection is performed the computer requests loading of a container 10' on the lifting drawer of entry access 6'. If the station is equipped with a bar-code scanner, user 100 must read the bar-code appearing on container 10' using scanner 12'. In this way, the data-processing unit will be able to check that the container of a pre-dispensed base 10' is the right one for the product chosen.

A second operating step consists in the manual closing of the door of entry access 6'. If the limit switch detects effective closing of the door, the data-processing unit activates closing of the electric locks of the door of entry access 6', and container 10' is moved automatically until a first position is reached, in which container 10' is perforated in its top part via perforating station 20'.

Then, a third operating step consists in moving perforated container 10' into a second position, at products dispensing station 2'.

In a fourth operating step, the colouring agents are supplied according to the amounts envisaged in the formula processed by the computer on the basis of the manual selection of the product or of the reading of the bar-code performed previously.

A fifth operating step, which occurs after the operation of dispensing of the colouring agents in container 10', consists in the transfer thereof to lid-inserting station 21' where a lid is applied on container 10', in the hole made by perforating station 20'.

A sixth operating step consists in transfer to one of mixing stations 3', by means of movement on a semicircular path for entry into the first mixing station 3' available.

A seventh operating step involves activation of mixing station 3' for a time sufficient to enable mixing of the product in container 10'.

During the stay of container 10' in mixing station 3', it is possible to activate a new production for another container following steps 1 to 7 (in the case where the station has two mixers 3') or else 1 to 6 (in the case where there is a single mixer).

Consequently, not only does the device forming the subject of the present invention enable execution of operations on a number of containers 10', but said operations can be performed on containers even of different size.

The second sequence of operations will lead, in the case of presence of two mixers 3', to loading the second mixer, if it is available.

When the mixing step is completed on one of mixers 3', the ninth operating step starts that envisages transfer of container 10' from mixing station 3' to the exit of tunnel 6' via a combination of semicircular paths.

The tenth operating step envisages transfer of container 10' to outside the tunnel at exit 6'.

At this point, the eleventh operating step envisages evacuation of container 10' on roller carriage 11' or similar equivalent in such a way that user 100 can pick up container 10' filled with the product.

Line 1, both in its first embodiment and in its second embodiment, is covered by a structure resistant to atmospheric agents, to the most common acids and solvents that may be present in the products, as well as to colouring agents, and is accessible along its sides for maintenance or repair inspections. The casing structure of line 1 comprises in fact panelling made of transparent or opaque material with transparent openings compatible with the solvents and colouring agents of the products, in such a way as to make it possible to follow proper execution of the steps of preparation of the product itself.

Line 1, both in its first embodiment and in its second embodiment described previously, enables operation on a number of distinct containers. When, in fact, a first container 10 of products has left product dispensing station 2 , a second container 10 can be loaded on line 1, perforated by perforating station 20, and finally filled with the colouring agents dispensed by product dispensing station 2. In the two embodiments described, it is consequently possible to load up to three containers 10 of distinct paints, given that the stations that are able to house a container 10 autonomously are themselves three in number: a first dispensing station and a second and a third mixing station.

The advantages of the line and of the method for dispensing and mixing for products emerge clearly in the light of the foregoing description. In particular, it enables provision of a station for creating complete products, in which, starting from reading of a bar-code, the colour described by the bar-code is recreated within the aforesaid container in a totally automatic way, with a sequential action of dispensing and mixing, without the need for the presence of a skilled operator and consequently with simplified human intervention.

Line 1 is separate, in the form of a single structure enclosed by a plurality of panels, so as to form a clearly defined machinery, unlike what occurs for lines of an industrial type, where clearly distinct processing stations are not present.

Line 1 is consequently suited to being installed also in environments that are not expressly industrial, such as for example shops or small firms, in so far as also a non-skilled user, merely by reading the bar-code on container 10 and, where present, by performing advanced payment of the amount of money for dispensing and mixing the product in container 10, it is possible to create a product of the desired colour without possessing specific skills in the field of management of industrial dispensing and mixing lines.

The possibility of loading a plurality of containers that are distinct, not only in terms of number but also in terms of size or shape, enable optimization of the processing times, given that mixing usually requires a longer time than dispensing of the colouring agents.

In the case where the line operates on a number of containers simultaneously, each container will be housed in a respective station (for example, a first container will be processed by the first dispensing station 2, whilst a second container will be processed by the second mixing station 3).

The stations of the line described herein, in fact, both in the first embodiment and in the second embodiment, are independent and separate from one another and can be configured in a modular way (for example, a number of mixing stations and a number of dispensing stations).

Certain variations, modifications or additions can be applied to the line described herein, which are obvious to a person skilled in the art, without thereby departing from the sphere of protection specified in the annexed claims. For instance, the runway in front of the dispensing station and the mixing stations can be replaced by equivalent means for displacement of the container.

Furthermore, the mutual position of the dispensing and mixing stations is not to be understood as in any way limiting with respect to what is highlighted in the figures annexed to the present description.

## Claims

1. Line (1, 1') for dispensing and mixing products comprising:
- an access(6, 6') for entry of containers (10, 10') onto the line (1, 1') fed in by a user;
- an exit (6', 7) from line (1, 1') of said containers (10, 10') to enable them to be picked up by the user;
- at least one first station (2, 2'), in which dispensing means feed a plurality of colouring agents into a container (10, 10'); and
- at least one second station (3, 3'), independent of said first station (2, 2'), in which mixing means mix said plurality of colouring agents in said container (10, 10');
said line (1, 1') comprises means (4, 4a) for automatic movement of said container (10, 10') between said stations (2, 2', 3, 3');
said stations (2, 2', 3, 3') and said movement means (4, 4a) are contained in a single closed structure (9, 9'), i.e., inaccessible to the user;
**characterized in that** said stations (1, 1', 2, 2', 3, 3'):
- are arranged in a common plane,
- and are independent and separated from each other, modularly connected together,
in order to create a modular line.

2. Line according to claim 1, wherein said first station (2, 2') dispenses said plurality of colours on the basis of a predetermined code.

3. Line according to claim 1, **characterized in that** it operates simultaneously on a plurality of containers (10, 10'), each positioned in a distinct station selected from between said at least first and second stations (2, 2', 3, 3')_{.}

4. Line according to claim 1, further comprising means for displacement of the container (10, 10') between said first station (2, 2') and said second station (3, 3').

5. Line according to claim 1, **characterized in that** said entry access (6, 6') is equipped with a door, which can be opened and closed manually, and further comprises means for detecting complete closing of said door.

6. Line according to claim 1, further comprising:
- a perforating station (20, 20') for perforation of a top part of said containers (10, 10'); and
- a lid-inserting station (21, 21'), for positioning a lid in the holes of said container (10, 10').

7. Line according to claim 1, further comprising an optional credit-card reader for advanced payment of the dispensing and mixing products, interfaced with a data-processing unit of said line (1, 1').

8. Line according to claim 1, further comprising a single entry/exit access (6') for said containers (10'), which is equipped with a door, that can be opened and closed manually, and further comprises means for detecting complete closing of said door.

9. Method for dispensing and mixing products using a line according to claim 1, comprising the following steps:
- a first step for dispensing a plurality of colours inside a container (10, 10'); and
- a second step for mixing said plurality of colours inside said container (10, 10');
the method being **characterized in that** said first dispensing step and said second mixing step occur in succession and are automatically performed on a line (1, 1') for dispensing and mixing products within a casing that is inaccessible to the user.

10. Method according to claim 9, wherein, prior to said dispensing step, said container (10, 10') is introduced on a line (1) for dispensing and mixing products, at its entry access (6, 6').

11. Method according to claim 10, wherein, prior to said dispensing step, said container (10') is introduced on a line (1') for dispensing and mixing products, at its entry/exit access (6'), and wherein, at the end of said mixing step, said container (10') of products is again positioned at said entry/exit access (6').

12. Method according to claim 10 or claim 11, wherein, prior to introduction of said container (10, 10') onto the line (1, 1'), a bar-code located on said container (10, 10') is read by a bar-code reader (12, 12').

13. Method according to claim 12, wherein said code identifies the product to be dispensed or the container of the base for dispensing one or more colours dispensed by a station (2, 2') having dispensing means for dispensing a plurality of colours.

14. Method according to claim 9, wherein, prior to said step for dispensing colours, a step of perforation of said container (10, 10') is performed by a perforating station (20, 20') of said line (1, 1').

15. Method according to claim 9, wherein, following upon said dispensing step and prior to said mixing step, a step of insertion of lids of said container (10, 10') is performed; said step of insertion of lids being performed by a lid-inserting station (21, 21'), which inserts a lid in said hole of said container (10, 10').

16. Method according to claim 9, wherein said step for dispensing said plurality of colours is performed following upon a payment of an amount of money; said payment being performed on said line (1, 1') via a credit-card reader of said line (1, 1'), which operates via a data-processing unit.

## Patentansprüche

1. Anordnung (1, 1') zur Ausgabe und Mischung von Produkten, aufweisend:
- einen Zugang (6, 6') zum Eintritt von Behältern (10, 10') in die Anordnung (1, 1'), die von einem Benutzer zugeführt werden;
- einen Austritt (6', 7) aus der Anordnung (1, 1') der Behälter (10, 10'), damit sie vom Benutzer aufgenommen werden können;
- mindestens eine erste Station (2, 2'), in welcher Ausgabemittel mehrere Farbmittel in einen Behälter (10, 10') füllen; und
- mindestens eine zweite Station (3, 3'), welche von der ersten Station (2, 2') unabhängig ist und in welcher Mischmittel die mehreren Farbmittel im Behälter (10, 10') mischen;
wobei die Anordnung (1, 1') Mittel (4, 4a) zur automatischen Bewegung des Behälters (10, 10') zwischen den Stationen (2, 2', 3, 3') aufweist;
die Stationen (2, 2', 3, 3') und die Bewegungsmittel (4, 4a) in einer einzigen geschlossen Struktur (9, 9') enthalten, d.h. für den Benutzer unzugänglich, sind;
**dadurch gekennzeichnet, dass** die Stationen (1, 1', 2, 2', 3, 3') :
- in einer gemeinsamen Ebene angeordnet sind,
- und unabhängig und getrennt voneinander modular miteinander verbunden sind,
um eine modulare Anordnung zu bilden.

2. Anordnung nach Anspruch 1, wobei die erste Station (2, 2') die mehreren Farben auf Basis eines vorbestimmten Codes ausgibt.

3. Anordnung nach Anspruch 1, **dadurch gekennzeichnet, dass** sie gleichzeitig auf mehrere Behälter (10, 10') wirkt, die jeweils in einer anderen Station positioniert sind, die aus den ersten und zweiten Stationen (2, 2', 3, 3') ausgewählt ist.

4. Anordnung nach Anspruch 1, ferner aufweisend Mittel zur Verschiebung der Behälter (10, 10') zwischen der ersten Station (2, 2') und der zweiten Station (3, 3').

5. Anordnung nach Anspruch 1, **dadurch gekennzeichnet, dass** der Eintrittszugang (6, 6') mit einer Tür ausgestattet ist, die manuell geöffnet und geschlossen werden kann, und ferner Mittel zum Erkennen der vollständigen Schließung der Tür aufweist.

6. Anordnung nach Anspruch 1, ferner aufweisend:
- eine Perforierstation (20, 20') zum Perforieren eines oberen Teils des Behälters (10, 10'); und
- eine Deckeleinfügestation (21, 21') zum Positionieren eines Deckels in den Löchern des Behälters (10, 10').

7. Anordnung nach Anspruch 1, ferner aufweisend ein optionales Kreditkartenlesegerät zur Vorauszahlung der Ausgabe und Mischung von Produkten, das über eine Schnittstelle mit einer Datenverarbeitungseinheit der Anordnung (1, 1') verbunden ist.

8. Anordnung nach Anspruch 1, ferner aufweisend einen einzigen Eintritts-/Austrittszugang (6') für die Behälter (10'), welcher mit einer Tür ausgestattet ist, die manuell geöffnet und geschlossen werden kann, und ferner Mittel zum Erkennen der vollständigen Schließung der Tür aufweist.

9. Verfahren zur Ausgabe und Mischung von Produkten unter Verwendung einer Anordnung nach Anspruch 1, aufweisend die folgenden Schritte:
- einen ersten Schritt zum Ausgeben von mehreren Farben innerhalb eines Behälters (10, 10'); und
- einen zweiten Schritt zum Mischen der mehreren Farben innerhalb eines Behälters (10, 10'); und
wobei das Verfahren **dadurch gekennzeichnet ist, dass** der erste Ausgabeschritt und der zweite Mischschritt hintereinander erfolgen und in einer Anordnung (1, 1') zur Ausgabe und Mischung von Produkten innerhalb eines für den Benutzer unzugänglichen Gehäuses automatisch ausgeführt werden.

10. Verfahren nach Anspruch 9, wobei der Behälter (10, 10') vor dem Ausgabeschritt in eine Anordnung (1) zur Ausgabe und Mischung von Produkten an ihrem Eintrittszugang (6, 6') eingeführt wird.

11. Verfahren nach Anspruch 10, wobei der Behälter (10') vor dem Ausgabeschritt in eine Anordnung (1') zur Ausgabe und Mischung von Produkten an ihrem Eintritts-/Austrittszugang (6') eingeführt wird, und wobei der Behälter (10') von Produkten am Ende des Mischschritts wieder am Eintritts-/Austrittszugang (6') positioniert wird.

12. Verfahren nach Anspruch 10 oder 11, wobei vor der Einführung des Behälters (10, 10') in die Anordnung (1, 1') ein auf dem Behälter (10, 10') befindlicher Strichcode von einem Strichcodelesegerät (12, 12') gelesen wird.

13. Verfahren nach Anspruch 12, wobei der Code das auszugebende Produkt oder den Behälter der Basis zur Ausgabe einer oder mehrerer Farben identifiziert, die von einer Station (2, 2') mit Ausgabemitteln zur Ausgabe von mehreren Farben ausgegeben werden.

14. Verfahren nach Anspruch 9, wobei vor dem Schritt zum Ausgeben von Farben ein Schritt des Perforierens des Behälters (10, 10') von einer Perforierstation (20, 20') der Anordnung (1, 1') ausgeführt wird.

15. Verfahren nach Anspruch 9, wobei nach dem Ausgabeschritt und vor dem Mischschritt ein Schritt des Einfügens von Deckeln des Behälters (10, 10') ausgeführt wird; wobei der Schritt des Einfügens von Deckeln von einer Deckeleinfügestation (21, 21') ausgeführt wird, welche einen Deckel in das Loch des Behälters (10, 10') einfügt.

16. Verfahren nach Anspruch 9, wobei der Schritt zum Ausgeben der mehreren Farben nach einer Zahlung eines Geldbetrags ausgeführt wird; wobei die Zahlung an der Anordnung (1, 1') über ein Kreditkartenlesegerät der Anordnung (1, 1') erfolgt, das über eine Datenverarbeitungseinheit funktioniert.

## Revendications

1. Circuit (1, 1') de distribution et de mélange de produits comprenant :
- un accès (6, 6') pour l'entrée des conteneurs (10, 10') sur le circuit (1, 1') alimentés par un utilisateur ;
- une sortie (6', 7) du circuit (1, 1') desdits conteneurs (10, 10') pour leur permettre d'être ramassés par l'utilisateur ;
- au moins un premier poste (2, 2'), dans lequel des moyens de distribution alimentent un conteneur (10, 10') avec une pluralité d'agents colorants ; et
- au moins un second poste (3, 3'), indépendant dudit premier poste (2, 2'), dans lequel des moyens de mélange mélangent ladite pluralité d'agents colorants dans ledit conteneur (10, 10') ;
ledit circuit (1, 1') comprend des moyens (4, 4a) de déplacement automatique dudit conteneur (10, 10') entre lesdits postes (2, 2', 3, 3') ;
lesdits postes (2, 2', 3, 3') et lesdits moyens de déplacement (4, 4a) sont contenus dans une structure unique fermée (9, 9'), c'est-à-dire inaccessible à l'utilisateur ;
**caractérisé en ce que** lesdits postes (1, 1', 2, 2', 3, 3') :
- sont agencés dans un plan commun,
- et sont indépendants et séparés les uns des autres, reliés ensemble de façon modulaire,
afin de créer un circuit modulaire.

2. Circuit selon la revendication 1, dans lequel ledit premier poste (2, 2') distribue ladite pluralité de couleurs, en se fondant sur un code prédéterminé.

3. Circuit selon la revendication 1, **caractérisé en ce qu'**il fonctionne simultanément sur une pluralité de conteneurs (10, 10'), chacun étant positionné dans un poste distinct choisi entre lesdits au moins premier et second postes (2, 2', 3, 3').

4. Circuit selon la revendication 1, comprenant en outre des moyens de déplacement du conteneur (10, 10') entre ledit premier poste (2, 2') et ledit second poste (3, 3').

5. Circuit selon la revendication 1, dans lequel ledit accès d'entrée (6, 6') est équipé d'une porte, qui peut être ouverte et refermée à la main, et comprend en outre des moyens de détection de la fermeture complète de ladite porte.

6. Circuit selon la revendication 1, comprenant en outre :
- un poste de perforation (20, 20') permettant la perforation d'une partie supérieure desdits conteneurs (10, 10') ; et
- un poste d'insertion de couvercle (21, 21') permettant de positionner un couvercle dans les trous dudit conteneur (10, 10')

7. Circuit selon la revendication 1, comprenant en outre un lecteur de carte de crédit, en option, permettant le paiement par anticipation des produits de distribution et de mélange, en interface avec une unité de traitement des données dudit circuit (1, 1').

8. Circuit selon la revendication 1, comprenant en outre un seul accès d'entrée/sortie (6') pour lesdits conteneurs (10'), qui est équipé d'une porte, qui peut être ouverte et refermée à la main, et qui comprend en outre des moyens de détection de la fermeture complète de ladite porte.

9. Procédé de distribution et de mélange de produits, utilisant un circuit selon la revendication 1, comprenant les étapes suivantes :
- une première étape de distribution d'une pluralité de couleurs à l'intérieur d'un conteneur (10, 10') ; et
- une seconde étape de mélange de ladite pluralité de couleurs, à l'intérieur dudit conteneur (10, 10') ;
le procédé étant **caractérisé en ce que** ladite première étape de distribution et ladite seconde étape de mélange se produisent successivement et sont exécutées automatiquement sur un circuit (1, 1') de distribution et de mélange des produits à l'intérieur d'un boîtier qui est inaccessible à l'utilisateur.

10. Procédé selon la revendication 9, dans lequel, avant ladite étape de distribution, ledit conteneur (10, 10') est introduit sur un circuit (1) de distribution et de mélange des produits, au niveau de son accès d'entrée (6, 6').

11. Procédé selon la revendication 10, dans lequel, avant ladite étape de distribution, ledit conteneur (10') est introduit sur un circuit (1') de distribution et de mélange de produits, au niveau de son accès d'entrée/de sortie (6'), et dans lequel, à la fin de ladite étape de mélange, ledit conteneur (10') de produits est à nouveau positionné au niveau dudit accès d'entrée/de sortie (6').

12. Procédé selon la revendication 10 ou la revendication 11, dans lequel, avant l'introduction dudit conteneur (10, 10') sur le circuit (1, 1'), un code barre situé sur ledit conteneur (10, 10') est lu par un lecteur de code barre (12, 12').

13. Procédé selon la revendication 12, dans lequel ledit code identifie le produit à distribuer ou le conteneur de la base afin de distribuer une ou plusieurs couleur(s) distribuée(s) par un poste (2, 2') possédant des moyens distributeurs permettant de distribuer une pluralité de couleurs.

14. Procédé selon la revendication 9 dans lequel, avant ladite étape de distribution de couleurs, une étape de perforation dudit conteneur (10, 10') est exécutée par un poste de perforation (20, 20') dudit circuit (1, 1').

15. Procédé selon la revendication 9, dans lequel, après ladite étape de distribution et avant ladite étape de mélange, est exécutée une étape d'insertion des couvercles dudit conteneur (10, 10') ; ladite étape d'insertion des couvercles étant exécutée par un poste d'insertion des couvercles (21, 21'), qui insère un couvercle dans ledit trou dudit conteneur (10, 10').

16. Procédé selon la revendication 9, dans lequel ladite étape de distribution de ladite pluralité de couleurs est exécutée à la suite d'un paiement d'une somme d'argent ; ledit paiement étant exécuté sur ledit circuit (1, 1') via un lecteur de carte de crédit dudit circuit (1, 1'), qui fonctionne via une unité de traitement des données.
